(19) **Europäisches Patentamt**

**European Patent Office**

**Office européen des brevets**

(11) **EP 1 175 089 A2**

(12) **EUROPEAN PATENT APPLICATION**

(43) Date of publication:
**23.01.2002 Bulletin 2002/04**

(51) Int Cl.7: **H04N 5/21**

(21) Application number: **01117220.2**

(22) Date of filing: **16.07.2001**

| (84) Designated Contracting States: **AT BE CH CY DE DK ES FI FR GB GR IE IT LI LU MC NL PT SE TR** Designated Extension States: **AL LT LV MK RO SI** | (72) Inventors: <br> • **Yoshiyama, Masahiko** Moriguchi-shi, Osaka (JP) <br> • **Maenaka, Akihiro** Moriguchi-shi, Osaka (JP) |
| (30) Priority: **17.07.2000 JP 2000216507** | (74) Representative: **Glawe, Delfs, Moll** **Patentanwälte Postfach 26 01 62** **D-80058 München (DE)** |
| (71) Applicant: **Sanyo Electric Co., Ltd.** **Moriguchi-shi, Osaka (JP)** | |

(54) **A method for suppressing noise in image signals and an image signal processing device adopting the same**

(57)    In an image signal processing device, a subtractor circuit 4 and an absolute value calculating circuit 6 calculate the absolute value of the difference between the image signal of the previous frame fed from a frame memory 1 and the image signal of the current frame, and a subtractor circuit 5 and an absolute value calculating circuit 7 calculate the absolute value of the difference between the image signal of the previous-previous frame fed from a frame memory 2 and the image signal of the previous frame. An adder circuit 8 adds together the thus calculated absolute values of the differences between those image signals to calculate the degree of motion, on the basis of which a gain setting circuit 9 sets a gain. The output from the subtractor circuit 4 is multiplied by this gain to generate a noise component.

FIG. 1

**Description**

**BACKGROUND OF THE INVENTION**

Field of the Invention

The present invention relates to a noise suppression method for reducing noise components included in input signals. The present invention relates particularly to a noise suppression method for reducing noise components in image signals that are fed in as input signals, and to an image signal processing device adopting such a noise suppression method.

Description of the Prior Art

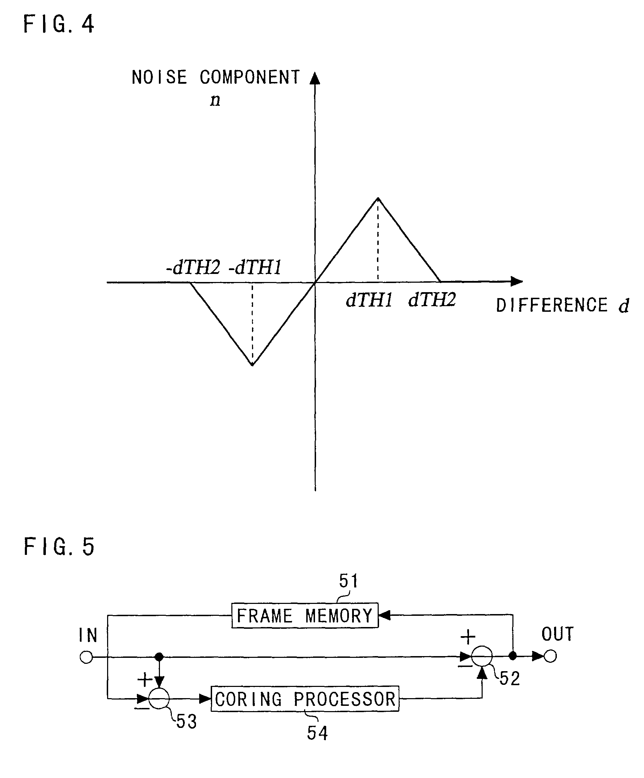

Conventionally, reduction of noise components included in input image signals is achieved in the following manner. The differences between the image signals of the frame that are currently being fed in (hereinafter referred to as the "current-frame image signals") and the image signals of the immediately previous frame (hereinafter referred to as the "previous-frame image signals") are calculated, and coring is performed on the thus calculated differences to generate noise components simulatively. Then, these noise components are eliminated from the current-frame image signals. Fig. 5 shows an image signal processing device adopting such a noise suppression method that reduces noise components by performing coring.

The image signal processing device shown in Fig. 5 is provided with a frame memory 51 for storing the previous-frame image signals, subtractor circuits 52 and 53 that receive the current-frame image signals fed in via an input terminal IN, and a coring processor circuit 54 that performs coring on the signals fed thereto from the subtractor circuit 53. In the image signal processing device configured in this way, the previous-frame image signals that have already been processed by the subtractor circuit 52 are stored in the frame memory 51. These previous-frame image signals are then fed from the frame memory 51 to the subtractor circuit 53 in such a way that the subtractor circuit 53 calculates the differences between the image signals of the individual pixels constituting the current frame as fed in via the input terminal IN and the image signals of the same pixels in the previous frame.

After the subtractor circuit 53 calculates the pixel-by-pixel differences between the current-frame image signals and the previous-frame image signals in this way, the thus calculated differences are subjected to coring performed with characteristics as shown in Fig. 4, which will be described later, to simulatively calculate noise components that are supposed to be present in the image signals of the individual pixels. Then, the subtractor circuit 52 subtracts, pixel by pixel, the noise components simulatively calculated by the coring processor circuit 54 from the current-frame image signals that are fed in via the input terminal IN, so that the image signals are fed out, with reduced noise components, via an output terminal OUT.

In this image signal processing device, the characteristics, shown in Fig. 4, of the coring performed by the coring processor circuit 54 are expressed by equations shown below. Here, $d$ represents the difference between the image signal of one pixel in the previous frame and the image signal of the same pixel in the current frame; $n$ represents the level of the noise component; $k1$, $k2$, $n1$, $dTH1$, and $dTH2$ are constants, where $dTH1 < dTH2$ and $k1 \times dTH1 = k2 \times (dTH2 - dTH1)$.

$$n = -k2 \times (dTH2 + d) \qquad \text{(when } -dTH2 \leq d \leq -dTH1\text{)}$$

$$n = k1 \times d \qquad \text{(when } -dTH1 \leq d \leq dTH1\text{)}$$

$$n = k2 \times (dTH2 - d) \qquad \text{(when } dTH1 \leq d \leq dTH2\text{)}$$

$$n = 0 \qquad \text{(when } d < -dTH2 \text{ or } dTH2 < d\text{)}$$

As a result of coring being performed with such characteristics by the coring processor circuit 54, when the difference $d$ between the image signal of one pixel in the previous frame and the image signal of the same pixel in the current frame falls within the range $d < -dTH1$ or $dTH1 < d$, motion is recognized to be involved between the previous frame and the current frame. Here, the greater the frame-to-frame difference $d$ of the image signal of a pixel, the greater proportion of the difference is ascribable to the motion relative to the proportion ascribable to the noise component, and thus the lower the level of the noise fed to the subtractor circuit 52. Eventually, when the difference $d$ falls within the range $d < -dTH2$ or $dTH2 < d$, no noise is recognized to be present.

In performing coring with such characteristics as shown in Fig. 4, making the threshold values $dTH1$ and $dTH2$ greater results in narrowing the range in which the difference $d$ of the image signal of one pixel in the previous frame and the image signal of the same pixel in the current frame satisfies $d < -dTH2$ or $dTH2 < d$, i.e. the range in which motion is recognized between the frames. This degrades the accuracy with which motion between frames is detected. By contrast, making the threshold values $dTH1$ and $dTH2$ smaller results in widening the range in which the difference $d$ of the image signal of one pixel in the previous frame and the image signal of the same pixel in the current frame satisfies $d < -dTH2$ or $dTH2 < d$, i.e. the range in which motion is recognized between the frames. This enhances the accuracy with which motion between frames is detected, but simultaneously degrades the accuracy with which noise components are detected when motion is involved.

## SUMMARY OF THE INVENTION

An object of the present invention is to provide a noise suppression method by which noise components included in image signals can be reduced even when motion is detected between frames, and to provide an image signal processing device adopting such a noise suppression method.

To achieve the above object, according to one aspect of the present invention, a noise suppression method for reducing noise in image signals includes: a step of detecting, for every image signal fed in, the variation of the image signal as calculated among the image signals output from an identical pixel for a plurality of frames, and outputting the variation as a degree of motion; and a step of decreasing the noise component to be eliminated from the image signal currently being fed in as the degree of motion increases, and keeping the component to be eliminated from the image signal currently being fed in zero when the degree of motion is greater than a predetermined value.

According to another aspect of the present invention, an image signal processing device is provided with: a motion detector for detecting, for every image signal fed in, the variation of the image signal as calculated among the image signals output from an identical pixel for a plurality of frames, and outputting the variation as a degree of motion; a noise component calculator for decreasing the noise component to be eliminated from the image signal currently being fed in as the degree of motion increases, and keeping the component to be eliminated from the image signal currently being fed in zero when the degree of motion is greater than a predetermined value; and a noise suppressor for eliminating the noise component generated by the noise component calculator from the image signal currently being fed in.

According to still another aspect of the present invention, an image signal processing device is provided with: a first subtractor circuit for subtracting the image signal currently being fed in from the image signal fed in from the identical pixel for the previous frame; a second subtractor circuit for subtracting the image signal fed in for the previous frame from the image signal fed in from the identical pixel for the previous-previous frame; first and second absolute value calculator circuits for calculating the absolute values of the outputs from the first and second subtractor circuits, respectively; a first adder circuit for adding together the outputs from the first and second absolute value calculator circuits; a gain setter circuit for setting a gain in such a way that the gain decreases as the output from the first adder circuit increases and that the gain remains zero when the output from the first adder circuit is greater than a predetermined value; a multiplier circuit for multiplying the output from the first subtractor circuit by the gain output from the gain setter circuit; and a second adder circuit for adding the output from the multiplier circuit to the image signal currently being fed in to eliminate a noise component therefrom.

## BRIEF DESCRIPTION OF THE DRAWINGS

This and other objects and features of the present invention will become clear from the following description, taken in conjunction with the preferred embodiments with reference to the accompanying drawings in which:

Fig. 1 is a block diagram showing the internal configuration of the image signal processing device of a first embodiment of the invention;
Fig. 2 is a diagram showing the characteristics of the gain setting circuit;
Fig. 3 is a block diagram showing the internal configuration of the image signal processing device of a second embodiment of the invention;
Fig. 4 is a diagram showing the characteristics of the coring processor circuit; and
Fig. 5 is a block diagram showing the internal configuration of a conventional image signal processing device.

## DESCRIPTION OF THE PREFERRED EMBODIMENTS

### First Embodiment

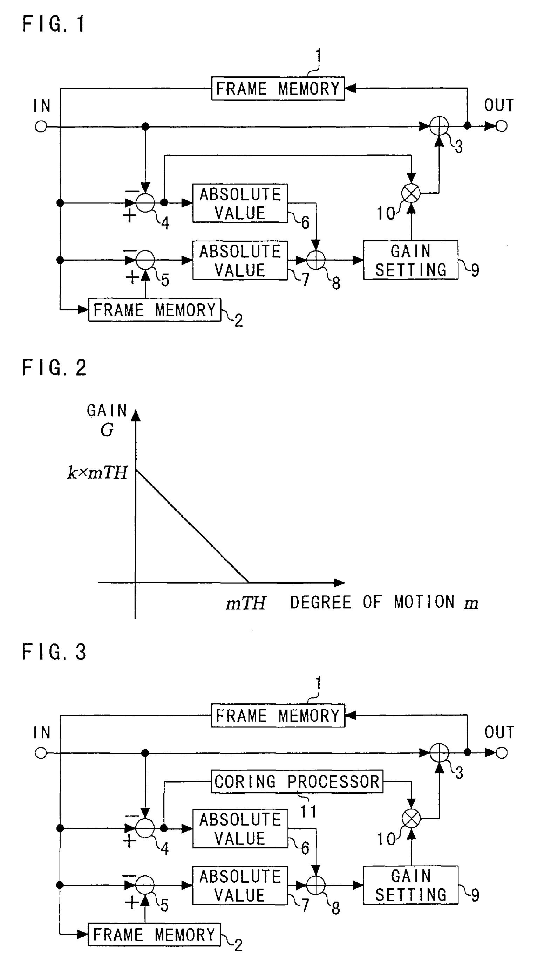

A first embodiment of the present invention will be described below with reference to the drawings. Fig. 1 is a block diagram showing the internal configuration of the image signal processing device of this embodiment.

The image signal processing device shown in Fig. 1 is provided with frame memories 1 and 2 each for storing image signals constituting one frame, an adder circuit 3 and a subtractor circuit 4 to which the current-frame image signals fed in via an input terminal IN are fed, a subtractor circuit 5 to which the previous-frame image signals are fed from the frame memory 1, absolute value calculating circuits 6 and 7 that calculate the absolute values of the outputs from the subtractor circuits 4 and 5 respectively, an adder circuit 8 that adds together the outputs from the absolute value calculating circuits 6 and 7, a gain setting circuit 9 that sets a gain in accordance with the output from the adder circuit 8, and a multiplier circuit 10 that multiplies the output from the subtractor circuit 4 by the gain set by the gain setting circuit 9.

In this image signal processing device, the previous-frame image signals are fed from the frame memory 1 to the subtractor circuit 4 and to the frame memory 2, and in addition the image signals of the frame preceding the previous frame (hereinafter referred to as the "previous-previous-frame image signals") are fed from the frame memory 2 to the subtractor circuit 5. Moreover, the output from the multiplier circuit 10 is fed to the adder circuit 3, and the output from the adder circuit 3 is fed out via an output terminal OUT and is also fed to the frame memory 1.

This image signal processing device configured as described above operates in the following manner. When the current-frame image signals start being fed in via the input terminal IN, the previous-frame image signals are stored in the frame memory 1, and the previous-previous-frame image signals are stored in the frame memory 2. Then, as the current-frame image signals are fed in pixel by pixel via the input terminal IN, the image signals of the same pixels in the previous and previous-previous frames are output from the frame memories 1 and 2 respectively.

As the image signals of the previous and previous-previous frames are output in this way, the subtractor circuit 4 calculates the differences between the image signals of the current and previous frames, and the subtractor circuit 5 calculates the differences between the image signals of the previous and previous-previous frames. Then, the absolute value calculating circuit 6 calculates the absolute values of the differences between the image signals of the current and previous frames calculated by subtractor circuit 4, and the absolute value calculating circuit 7 calculates the absolute values of the differences between the image signals of the previous and previous-previous frames calculated by subtractor circuit 5.

The adder circuit 8 then adds together the absolute values of the differences between the image signals of the current and previous frames calculated by the absolute value calculating circuit 6 and the absolute values of the differences between the image signals of the previous and previous-previous frames calculated by the absolute value calculating circuit 7. In this way, the degree of motion between frames as observed in the pixels of which the image signals are currently being fed in is calculated. When the degree of motion between frames is calculated in this way, the gain setting circuit 9, having characteristics as shown in Fig. 2, sets a gain that reflects the degree of motion. Now, the characteristics of the gain setting circuit 9 will be described.

Let the degree of motion be $m$, and let the gain set by the gain setting circuit 9 be $G$. Then, the relationship between the degree of motion be $m$ and the gain $G$ is expressed by equations shown below. Here, $mTH$ and $k$ represent positive constant such that $k \times mTH \leq 1$.

$$G = k \times (mTH - m) \qquad (\text{when } m < mTH)$$

$$G = 0 \qquad (\text{when } m \geq mTH)$$

Hence, when $m \geq mTH$, i.e. when the degree of motion between the three frames is sufficiently great, a sufficiently great proportion of the difference between the image signals of the current and previous frames is ascribable to a motion component. Thus, by keeping the gain $G$ equal to 0, it is possible to make the multiplier circuit 10 output no noise component. On the other hand, when $m < mTH$, the greater the degree of motion, the greater proportion of the difference between the image signals of the current and previous frames is ascribable to a motion component. Thus, by varying the gain $G$ in such a way that the gain $G$ decreases as the degree of motion increases, it is possible to make the multiplier circuit 10 output a noise component that reflects the motion component.

In the multiplier circuit 10, the differences that the subtractor circuit 4 has calculated by subtracting the current-frame image signals from the previous-frame image signals are multiplied by the gain $G$ fed from the gain setting circuit 9, and thereby noise components are calculated. Then, the output from the multiplier circuit 10 is added to the current-frame image signals fed in via the input terminal IN, and as a result the current-frame image signals, now cleared of their noise components as calculated by the multiplier circuit 10, are fed out via the output terminal OUT and are also fed to the frame memory 1.

Now, suppose that image signals constituting one frame are obtained on the basis of the image signals output from $n$ pixels G1 to G$n$. Then, the operations described above proceed in the following manner when, for example, the image signal output from the pixel G$x$ is fed in via the input terminal IN. Here, the image signals output from the pixels G1 to G$n$ for the current frame are referred to by $da1$ to $dan,$ those for the previous frame by $db1$ to $dbn,$ and those for the previous-previous frame by $dc1$ to $dcn$. In the present specification, $da1$ to $dan, db1$ to $dbn,$ and $dc1$ to $dcn$ each represents the quantity (level) of each image signal.

When the image signal $dax$ from the pixel G$x$ for the current frame is fed in via the input terminal IN, the image signal $dbx$ from the pixel G$x$ for the previous frame is output from the frame memory 1 to the subtractor circuit 4 and to the frame memory 2, and the image signal $dcx$ from the pixel G$x$ for the previous-previous frame is output from the frame memory 2 to the subtractor circuit 5. Thus, the subtractor circuit 4 outputs the difference $dbx - dax$ between the image signals of the current and previous frames to the absolute value calculating circuit 6, and the subtractor circuit 5 outputs the difference $dcx - dbx$ between the image signals of the previous and previous-previous frames to the absolute value calculating circuit 7. Then, the absolute value calculating circuits 6 and 7 calculate the absolute values $|dbx - dax|$ and $|dcx - dbx|$ of the differences between the image signals of the current and previous frames and between the image signals of the previous and previous-previous frames respectively.

Then, the adder circuit 8 adds together the values calculated by the absolute value calculating circuits 6 and 7, and thereby calculates the degree of motion $m$ as $m = |dbx - dax| + |dcx - dbx|$. Here, the absolute values $|dbx - dax|$ and $|dcx - dbx|$ of the differences between the image signals individually represent the degree of motion between the current and previous frames and the degree of motion between the previous and previous-previous frames respectively, and therefore the degree of motion $m$ calculated by the adder circuit 8 represents the degree of motion between the three frames in the pixel G$x$.

Then, as described earlier, the gain setting circuit 9, on the basis of its characteristics shown in Fig. 2, calculates a gain $G$ that reflects the degree of motion $m$ calculated by the adder circuit 8. Here, the gain $G$ satisfies $0 \leq G \leq 1$. The gain setting circuit 9 feeds this gain $G$ to the multiplier circuit 10. The multiplier circuit 10 multiplies by the gain $G$ the difference $dbx - dax$ between the image signals of the current and previous frames output from subtractor circuit 4, and thereby calculates a noise component as $G \times (dbx - dax)$. Here, the noise component thus calculated has the opposite sign to the image signal $dax$ for the current frame that is fed in via the input terminal IN. That is, the noise component calculated here has the opposite sign to the noise component $n$ calculated by the coring processor circuit 54 in the conventional image signal processing device (Fig. 5).

The noise component $n$ thus calculated is fed to the adder circuit 3. The adder circuit 3 adds the noise component $G \times (dbx - dax)$ to the image signal $dax$ from the pixel G$x$ for the current frame, and as a result the image signal, now cleared of its noise component and thus expressed as $dax - G \times (dbx - dax)$, is fed out via the output terminal OUT. Simultaneously, this image signal from the pixel G$x$, now cleared of its noise component, is fed to the frame memory 1 and stored therein so as to be used later as the previous-frame image signal when the image signal from the pixel G$x$ for the next frame is processed. On the other hand, the image signal from the pixel G$x$ for the previous frame that has been output from the frame memory 1 to the frame memory 2 is stored there so as to be used later as the previous-previous-frame image signal when the image signal from the pixel G$x$ for the next frame is processed. When the image signal from the pixel G$x$ has been cleared of its noise component in this way, the image signal from the pixel G$(x + 1)$ starts being processed in the same manner so as to be cleared of its noise component.

### Second Embodiment

A second embodiment of the present invention will be described below with reference to the drawings. Fig. 3 is a block diagram showing the internal configuration of the image signal processing device of this embodiment. In the image signal processing device shown in Fig. 3, such circuit blocks as serve the same purposes as in the image signal processing device shown in Fig. 1 are identified with the same reference numerals, and their detailed explanations will not be repeated.

The image signal processing device shown in Fig. 3 is obtained by additionally providing a coring processor circuit 11 in the image signal processing device of the first embodiment (Fig. 1). Specifically, the output from the subtractor circuit 4 is fed to the coring processor circuit 11, and the output from the coring processor circuit 11 is fed to the multiplier circuit 10. The coring processor circuit 11 here, like the coring processor circuit 54 in the conventional image signal processing device (Fig. 5), has characteristics as shown in Fig. 4.

This image signal processing device configured as described above operates largely in the same manner as the image signal processing device of the first embodiment. Specifically, the subtractor circuit 4 calculates the differences between the image signals of the current frame that are fed in via the input terminal IN and the image signals of the previous frame that are output from the frame memory 1, and then the absolute value calculating circuit 6 calculates the absolute values of those differences between the image signals of the current and previous frames. On the other hand, the subtractor circuit 5 calculates the differences between the image signals of the previous frame that are output from the frame memory 1 and the image signals of the previous-previous frame that are output from the frame memory 2, and then the absolute value calculating circuit 7 calculates the absolute values of those differences between the image signals of the previous and previous-previous frames.

The adder circuit 8 then adds together the absolute values of the differences between the image signals of the current and previous frames and the absolute values of the differences between the image signals of the previous and previous-previous frames, and thereby calculates the degree of motion between frames as observed in the pixels of which the image signals are currently being fed in. When the degree of motion between frames is calculated in this way, the gain setting circuit 9, on the basis of its characteristics shown in Fig. 2, sets a gain that reflects the degree of motion output from the adder circuit 8, and outputs the gain to the multiplier circuit 10.

Here, the coring processor circuit 11, on the basis of its characteristics shown in Fig. 4, performs coring on the differences between the image signals of the current and previous frames as output from the subtractor circuit 4. Specifically, depending on the difference $d$ between the image signals of the current and previous frames, the noise component $n$ output to the multiplier circuit 10 is calculated by equations shown below. Here, $k1$, $k2$, $n1$, $dTH1$, and $dTH2$ are constants, where $dTH1 < dTH2$ and $k1 \times dTH1 = k2 \times (dTH2 - dTH1)$.

$$n = -k2 \times (dTH2 + d) \qquad (\text{when } -dTH2 \leq d \leq -dTH1)$$

$$n = k1 \times d \qquad (\text{when } -dTH1 \leq d \leq dTH1)$$

$$n = k2 \times (dTH2 - d) \qquad (\text{when } dTH1 \leq d \leq dTH2)$$

$$n = 0 \qquad (\text{when } d < -dTH2 \text{ or } dTH2 < d)$$

In the multiplier circuit 10, the noise components $n$ thus calculated through coring by the coring processor circuit 11 are multiplied by the gain $G$ fed from the gain setting circuit 9, and the resulting values $G \times n$ are output anew, as noise components, to the adder circuit 3. Then, the output from the multiplier circuit 10 is added to the image signals of the current frame that are fed in via the input terminal IN, and as a result the image signals of the current frame, now cleared of their noise components as calculated by the multiplier circuit 10, are fed out via the output terminal OUT and are also fed to the frame memory 1.

Now, suppose that, as in the first embodiment, image signals constituting one frame are obtained on the basis of the image signals output from $n$ pixels G1 to G$n$. Then, the operations described above proceed in the following manner when, for example, the image signal output from the pixel Gx is fed in via the input terminal IN. Here, as in the first embodiment, the image signals output from the pixels G1 to G$n$ for the current frame are referred to by $da1$ to $dan$, those for the previous frame by $db1$ to $dbn$, and those for the previous-previous frame by $dc1$ to $dcn$.

First, the subtractor circuit 4 outputs the difference $dbx - dax$ between the image signals of the current and previous frames, and the subtractor circuit 5 outputs the difference $dcx - dbx$ between the image signals of the previous and previous-previous frames. Then, the absolute value calculating circuits 6 and 7 calculate the absolute values $|dbx - dax|$ and $|dcx - dbx|$ of the differences between the image signals of the current and previous frames and between the image signals of the previous and previous-previous frames respectively.

Next, the adder circuit 8 calculates the degree of motion $m$ as $m = |dbx - dax| + |dcx - dbx|$, and then the gain setting circuit 9, on the basis of its characteristics shown in Fig. 2, calculates a gain $G$ that reflects the degree of motion $m$ calculated by the adder circuit 8. Here, the coring processor circuit 11, on the basis of its characteristics shown in Fig. 4, calculates a noise component $n$ that reflects the difference $dbx - dax$ between the image signals as calculated by the subtractor circuit 4. This noise component $n$ has the opposite sign to the noise component calculated by the coring processor circuit 54 in the conventional image signal processing device (Fig. 5).

Then, the multiplier circuit 10 multiplies by the gain $G$ set by the gain setting circuit 9 the noise component $n$ output from the coring processor circuit 11, and thereby produces a noise component $G \times n$ anew. When the noise component $G \times n$ thus calculated is fed to the adder circuit 3, the adder circuit 3 adds the noise component $G \times n$ to the image signal from the pixel Gx for the current frame, and as a result the image signal, now cleared of its noise component, is fed out via the output terminal OUT.

Simultaneously, this image signal from the pixel Gx, now cleared of its noise component, is fed to the frame memory 1 and stored therein so as to be used later as the previous-frame image signal when the image signal from the pixel G*x* for the next frame is processed. On the other hand, the image signal from the pixel G*x* for the previous frame that has been output from the frame memory 1 to the frame memory 2 is stored therein so as to be used later as the previous-previous-frame image signal when the image signal from the pixel G*x* for the next frame is processed. When the image signal from the pixel G*x* has been cleared of its noise component in this way, the image signal from the pixel G(*x* + 1) starts being processed in the same manner so as to be cleared of its noise component.

In the first and second embodiments described above, two frame memories are provided so that, in each pixel, motion is recognized by calculating the differences between the image signals of three consecutive frames, two by two. However, it is possible to use more frame memories and recognize motion in each pixel by calculating the differences between the image signals of more consecutive frames. By increasing the number of frames referred to in this way, it is possible to enhance the accuracy with which motion is recognized in each pixel and thereby enhance reliability. This makes it possible to eliminate noise components from output image signals more securely.

The gain setting circuit may have different characteristics from those shown in Fig. 2; for example, it may be so configured that, when the degree of motion *m* is smaller than a predetermined value smaller than *mTH,* the gain *G* is kept constant at $k \times mTH$; when the degree of motion *m* is greater than this predetermined value and smaller than *mTH,* the gain *G* decreases as the degree of motion *m* increases; and, when the degree of motion *m* is greater than *mTH,* the gain *G* is kept equal to 0. The coring processor circuit may have different characteristics from those shown in Fig. 4; for example, it may be so configured that, when the difference between the image signals of the current and previous frames is smaller or greater than a predetermined value, it outputs 0 as a noise component.

According to the present invention, the degree of motion is detected on the basis of how image signals vary between a plurality of frames. This permits motion to be detected with higher accuracy than by conventional methods in which coring is performed between two frames. Moreover, according to the present invention, the degree of motion is detected, and, as the degree of motion increases, noise components are assumed to decrease. This makes it possible to properly determine the proportion of motion components to noise components in the differences between the previous-frame image signals, which have already been cleared of their noise components, and the current-frame image signals. As a result, as opposed to conventional methods that perform coring to discriminate motion components from noise components, it is possible to eliminate noise components even when motion components are involved, and thus process image signals with higher accuracy.

**Claims**

1.  A noise suppression method for reducing noise in image signals, comprising:

    a step of detecting, for every image signal fed in, a variation of the image signal as calculated among image signals output from an identical pixel for a plurality of frames, and outputting the variation as a degree of motion; and
    a step of decreasing a noise component to be eliminated from the image signal currently being fed in as the degree of motion increases, and keeping the noise component to be eliminated from the image signal currently being fed in zero when the degree of motion is greater than a predetermined value.

2.  A noise suppression method as claimed in claim 1,
    wherein the degree of motion is detected by adding together, among the image signals output from the identical pixel for the plurality of frames, absolute values of differences between image signals output from the identical pixel for every two consecutive frames.

3.  A noise suppression method as claimed in claim 1, further comprising:

    a step of calculating a gain that decreases as the degree of motion increases and that remains zero when the degree of motion is greater than the predetermined value; and
    a step of generating the noise component by multiplying by the gain a difference between the image signal currently being fed in for a current frame and an image signal fed in from the identical pixel for an immediately previous frame.

4.  A noise suppression method as claimed in claim 3,
    wherein, let the gain be *G,* then $0 \leq G \leq 1$.

5.  A noise suppression method as claimed in claim 1, further comprising:

a step of calculating a gain that decreases as the degree of motion increases and that remains zero when the degree of motion is greater than the predetermined value;

a step of performing coring on a difference between the image signal currently being fed in for a current frame and an image signal fed in from the identical pixel for an immediately previous frame in such a way that, when the difference between the image signals of the current and previous frames is greater than a predetermined threshold value, the difference is made equal to zero; and

a step of generating the noise component by multiplying by the gain the difference between the image signals of the current and previous frames that has undergone the coring.

6. A noise suppression method as claimed in claim 5,

wherein, let the difference between the image signals of the current and previous frames be $d$, let the value of the difference after the coring be $n$, and let the predetermined threshold value be $dTH2$, then the coring is performed with characteristics given by

$$n = -k2 \times (dTH2 + d) \qquad \text{(when } -dTH2 \leq d \leq -dTH1)$$

$$n = k1 \times d \qquad \text{(when } -dTH1 \leq d \leq dTH1)$$

$$n = k2 \times (dTH2 - d) \qquad \text{(when } dTH1 \leq d \leq dTH2)$$

$$n = 0 \qquad \text{(when } d < -dTH2 \text{ or } dTH2 < d)$$

where $k1$ and $k2$ represent positive constants, and $dTH1$ represents a value that satisfies $0 < dTH1 < dTH2$ and $k1 \times dTH1 = k2 \times (dTH2 - dTH1)$.

7. A noise suppression method as claimed in claim 5,

wherein, let the gain be $G$, then $0 \leq G \leq 1$.

8. An image signal processing device comprising:

a motion detector for detecting, for every image signal fed in, a variation of the image signal as calculated among image signals output from an identical pixel for a plurality of frames, and outputting the variation as a degree of motion;

a noise component calculator for decreasing a noise component to be eliminated from the image signal currently being fed in as the degree of motion increases, and keeping the noise component to be eliminated from the image signal currently being fed in zero when the degree of motion is greater than a predetermined value; and

a noise suppressor for eliminating the noise component generated by the noise component calculator from the image signal currently being fed in.

9. An image signal processing device as claimed in claim 8,

wherein the motion detector comprises:

a plurality of difference calculators for calculating, among the image signals output from the identical pixel for the plurality of frames, absolute values of differences between image signals output from the identical pixel for every two consecutive frames; and

an adder for adding together the absolute values, output from the plurality of difference calculators, of the differences between the image signals.

10. An image signal processing device as claimed in claim 8,

wherein the noise component calculator comprises:

a gain setter for setting a gain that decreases as the degree of motion increases and that remains zero when the degree of motion is greater than the predetermined value;

a subtractor for calculating a difference between the image signal currently being fed in for a current frame and an image signal fed in from the identical pixel for an immediately previous frame; and
a multiplier for multiplying by the gain output from the gain setter the difference, calculated by the subtractor, between the image signals of the current and previous frames.

**11.** An image signal processing device as claimed in claim 10,
wherein, let the gain be $G$, then $0 \leq G \leq 1$.

**12.** An image signal processing device as claimed in claim 8,
wherein the noise component calculator comprises:

a gain setter for setting a gain that decreases as the degree of motion increases and that remains zero when the degree of motion is greater than the predetermined value;
a subtractor for calculating a difference between the image signal currently being fed in for a current frame and an image signal fed in from the identical pixel for an immediately previous frame;
a coring processor for performing coring on the difference, calculated by the subtractor, between the image signals of the current and previous frames in such a way that, when the difference between the image signals of the current and previous frames is greater than a predetermined threshold value, the difference is made equal to zero; and
a multiplier for multiplying by the gain output from the gain setter the difference between the image signals of the current and previous frames that is output from the coring processor after undergoing the coring.

**13.** An image signal processing device as claimed in claim 12,
wherein, let the difference between the image signals of the current and previous frames be $d$, let the value of the difference after the coring be $n$, and let the predetermined threshold value be $dTH2$, then the coring processor performs the coring with characteristics given by

$$n = -k2 \times (dTH2 + d) \qquad \text{(when } -dTH2 \leq d \leq -dTH1)$$

$$n = k1 \times d \qquad \text{(when } -dTH1 \leq d \leq dTH1)$$

$$n = k2 \times (dTH2 - d) \qquad \text{(when } dTH1 \leq d \leq dTH2)$$

$$n = 0 \qquad \text{(when } d < -dTH2 \text{ or } dTH2 < d)$$

where $k1$ and $k2$ represent positive constants, and $dTH1$ represents a value that satisfies $0 < dTH1 < dTH2$ and $k1 \times dTH1 = k2 \times (dTH2 - dTH1)$.

**14.** An image signal processing device as claimed in claim *12,*
wherein, let the gain be $G$, then $0 \leq G \leq 1$.

**15.** An image signal processing device comprising:

a first subtractor circuit for subtracting an image signal currently being fed in for a current frame from an image signal fed in from an identical pixel for a previous frame;
a second subtractor circuit for subtracting the image signal fed in for the previous frame from an image signal fed in from the identical pixel for a previous-previous frame;
first and second absolute value calculator circuits for calculating absolute values of outputs from the first and second subtractor circuits, respectively;
a first adder circuit for adding together outputs from the first and second absolute value calculator circuits;
a gain setter circuit for setting a gain in such a way that the gain decreases as an output from the first adder circuit increases and that the gain remains zero when the output from the first adder circuit is greater than a predetermined value;
a multiplier circuit for multiplying the output from the first subtractor circuit by the gain output from the gain setter circuit; and

a second adder circuit for adding an output from the multiplier circuit to the image signal currently being fed in for the current frame to eliminate a noise component therefrom.

**16.** An image signal processing device as claimed in claim 15, further comprising:

a coring processor circuit for making the output from the first subtractor circuit equal to zero when the output from the first subtractor circuit is greater than a predetermined threshold value,

wherein the multiplier circuit multiplies an output from the coring processor circuit by the gain output from the gain setter circuit and feeds a resulting value to the second adder circuit.

FIG. 1

FIG. 2

FIG. 3

FIG. 4

FIG. 5